Europäisches Patentamt

European Patent Office

Office européen des brevets

(11) Veröffentlichungsnummer : **0 145 844**
B1

(12)

# EUROPÄISCHE PATENTSCHRIFT

(45) Veröffentlichungstag der Patentschrift :
06.05.87

(51) Int. Cl.⁴ : **G 01 B 21/00**

(21) Anmeldenummer : 84110204.9

(22) Anmeldetag : 28.08.84

(54) Längen- oder Winkelmesseinrichtung.

(30) Priorität : 24.09.83 DE 3334609

(43) Veröffentlichungstag der Anmeldung :
26.06.85 Patentblatt 85/26

(45) Bekanntmachung des Hinweises auf die Patenterteilung : 06.05.87 Patentblatt 87/19

(84) Benannte Vertragsstaaten :
AT CH DE FR GB IT LI NL SE

(56) Entgegenhaltungen :
DE-B- 1 075 325
GB-A- 1 451 857
GB-A- 1 598 290

(73) Patentinhaber : Dr. Johannes Heidenhain GmbH
Nansenstrasse 17
D-8225 Traunreut (DE)

(72) Erfinder : Berner, Eckhhard, Ing. grad.
Dohrerstrasse 193
D-4050 Mönchengladbach 2 (DE)

EP 0 145 844 B1

## Beschreibung

Die Erfindung bezieht sich auf eine Längen- oder Winkelmeßeinrichtung nach dem Oberbegriff des Anspruchs 1.

Es ist allgemein bekannt, Werkzeugmaschinen mit sogenannten Grenzlagenschaltern zu versehen, die von am Maschinenschlitten befestigten Nocken betätigt werden. Wie schon deren Name sagt, soll in den Grenzlagen des Maschinenschlittens ein Schaltvorgang stattfinden. Im allgemeinen ist dies ein « Not-Aus » für die Maschine. Die Grenzlage ist dann erreicht, wenn Nocken und Schalterstößel die gleiche Stellung haben und der Schalter betätigt wird (siehe Simon « Die numerische Steuerung von Werkzeugmaschinen », Seite 7, Ausgabe 1971). Wegen der großen Massen der bewegten Maschinenteile und des daraus resultierenden Überlaufs der Maschine werden häufig Vorabschaltpunkte vorgesehen, an denen die Geschwindigkeit des Maschinenschlittens bereits reduziert wird. An diesen Vorabschaltpunkten sind ebenfalls Schalter angeordnet, die von Nocken betätigt werden.

Für die Schalter und Nocken müssen an der Maschine genau bearbeitete Montageflächen vorgesehen werden, was Platz beansprucht und Kosten verursacht.

Der Erfindung liegt die Aufgabe zugrunde, den Raumbedarf und die Kosten für den Anbau derartiger Grenzlagenschalteinrichtungen zu verringern und die Vielseitigkeit von Meßeinrichtungen zu erhöhen.

Diese Aufgabe wird erfindungsgemäß durch die im Anspruch 1 angegebenen Merkmale gelöst.

Die besonderen Vorteile der Erfindung liegen darin, daß für die Grenzlagenschalter und/oder die Nocken keine gesonderten Montageflächen vorgesehen sein müssen, und daß die Lage der Grenzlagenschalteinrichtung verändert werden kann. Durch die Zusammenfassung von Meßeinrichtung und Teilen der Grenzlagenschalteinrichtung erhöhen sich die Herstellungskosten der Meßeinrichtung in viel geringerem Maße, als für eine separate Montage von Grenzlagenschalter und Nocken zu veranschlagen wäre.

Ausführungsformen der Erfindung sind den abhängigen Ansprüchen zu entnehmen.

Mit Hilfe von Ausführungsbeispielen soll anhand der Zeichnung die Erfindung noch näher erläutert werden.

Es zeigen

Figur 1 eine schematische Ansicht einer gekapselten Längenmeßeinrichtung,

Figur 2 einen Teilquerschnitt einer Meßeinrichtung nach Fig. 1 und

Figur 3 eine schematische Ansicht einer offenen Längenmeßeinrichtung.

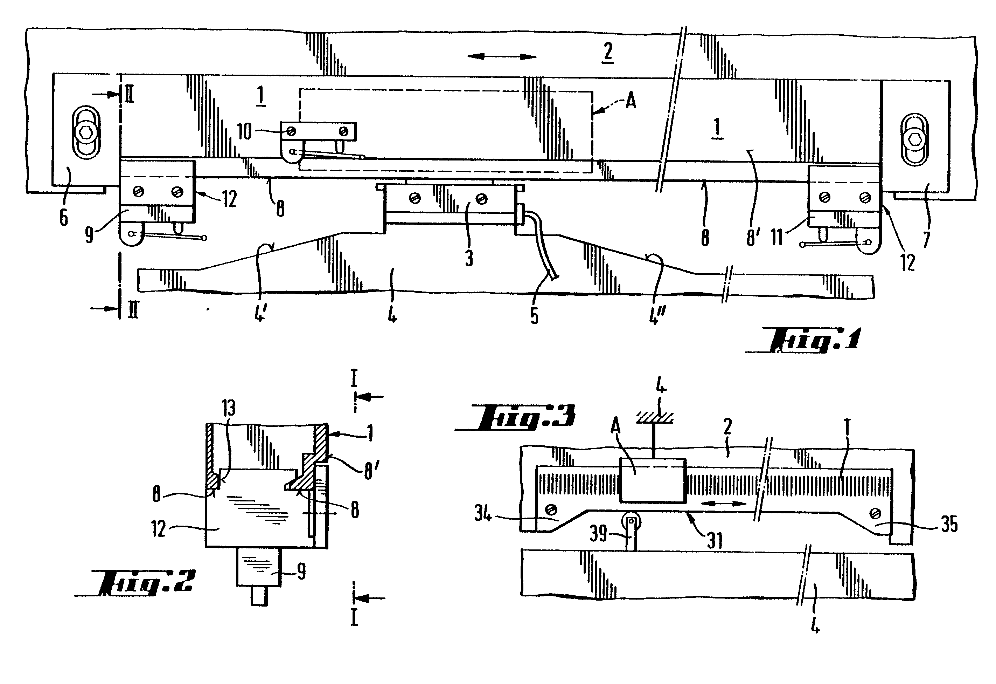

Eine in Figur 1 gezeigte Längenmeßeinrichtung 1 ist am Schlitten 2 einer nicht näher dargestellten Werkzeugmaschine montiert. Im Innern trägt die Längenmeßeinrichtung 1 eine hier nicht gezeigte Meßteilung, die fotoelektrisch von einem Abtastkopf A in bekannter Weise abgetastet wird. Der Abtastkopf A ist mittels eines Montagefußes 3 am Bett 4 der Werkzeugmaschine angebracht, welches Schaltnocken 4' und 4" aufweist. Bei Relativbewegungen zwischen dem Maschinenbett 4 und dem Schlitten 2 wird die Meßteilung bezüglich des Abtastkopfes A verschoben und es werden Meßsignale erzeugt, die über ein Kabel 5 einer nicht dargestellten Auswerte-/Anzeigebaueinheit zugeführt werden. Die Auswerte-/Anzeigebaueinheit ist bei modernen Maschinen als numerische Steuerung ausgebildet, die in Abhängigkeit ihres Programmes und der ermittelten Meßwerte Steuerbefehle an die Maschine ausgibt.

Aus meßtechnisch bedingten baulichen Gründen ist der Abtastkopf A im allgemeinen erheblich länger als der Montagefuß 3 (siehe DE-PS 27 06 926), so daß nicht die gesamte Länge der Meßteilung als Meßlänge zur Verfügung steht, da der Abtastkopf A in seiner Endstellung bereits an die Endstücke 6, 7 des Gehäuses 8 der Meßeinrichtung 1 anstößt, wenn die Endpartien des Montagefußes 3 noch Abstand von den Endstücken 6, 7 aufweisen. Dieser Abstand wurde bislang nicht ausgenutzt, um die Meßeinrichtung vielseitiger auszugestalten. Nunmehr werden erfindungsgemäß direkt an der Meßeinrichtung 1 sogenannte Grenzlagenschalter 9, 10, 11 angebracht.

Da die Oberflächen des Gehäuses 8 der Meßeinrichtung 1 ohnehin sehr exakt bearbeitet sind, ist kein zusätzlicher Aufwand erforderlich, um die Grenzlagenschalter 9, 10, 11 zu montieren. Besonders vorteilhaft kann die Meßeinrichtung 1 ausgestaltet werden, wenn die Grenzlagenschalter 9, 10, 11 verschiebbar und klemmbar montiert werden. In diesem Fall ist eine besonders einfache Justierung der Grenzlagenschalter 9, 10, 11 möglich und es können die physikalischen Gegebenheiten bei den einzelnen Maschinen auf einfachste Weise bei der Montage berücksichtigt werden. Auch können Vorabschaltpunkte in nahezu beliebiger Weise eingerichtet werden, indem an verschiedenen Flächen 8' des Gehäuses 8 Grenzlagenschalter 9, 10, 11 installiert werden, die in Meßrichtung gestaffelt sind.

Im vorliegenden Beispiel ist ein Vorabschalter 10 an der Fläche 8' der Meßeinrichtung 1 angebracht, der von einem nicht dargestellten Auslegearm betätigt wird, der am Maschinenbett 4 montiert ist. Nach Betätigung des Vorabschalters 10 wird die Geschwindigkeit des Maschinenschlittens 2 soweit reduziert, daß der Schlitten 2 rechtzeitig nach Betätigung des Grenzlagenschalters 9 durch den Nocken 4' zum Stillstand kommt.

In gleicher Weise kann an der Meßeinrichtung 1 ein oder mehrere weitere Vorabschalter installiert sein, deren Montage sich nach den Anforderungen bei der Maschine richtet, und die mit korrespondierenden Schaltnocken 4', 4" zusammenwirken.

In Figur 2 ist ein Teilschnitt entlang der Linie II-II gezeigt, aus dem ersichtlich ist, daß ein Montageelement 12, auf dem der Grenzlagenschalter 9 befestigt ist, in einem Längsschlitz 13 festgeklemmt ist, der üblicherweise in derartigen Längenmeßeinrichtung in Meßrichtung verläuft und die Verbinddung zwischen Abtastwagen A und Montagefuß 3 ermöglicht. Die Art der Klemmbefestigung wird der Fachmann den Erfordernissen entsprechend ausbilden.

Figur 3 zeigt sehr schematisiert ein offenes Meßsystem, bei dem die Meßteilung T direkt am Trägerkörper 31 angebracht ist, der auch Schaltnocken 34 und 35 für einen Grenzlagenschalter 39 trägt, der am Maschinenbett 4 montiert ist. Auch der Abtastwagen A ist starr mit dem Maschinenbett 4 verbunden.

Dieses stark vereinfachte Beispiel soll zeigen, daß es ins Belieben des Fachmanns gestellt ist, wahlweise die Grenzlagenschalter oder die korrespondierenden Nocken an der Meßeinrichtung 1 anzubringen, und den jeweils anderen Teil der Schalteinrichtung an der Maschine vorzusehen.

## Patentansprüche

1. Längen- oder Winkelmeßeinrichtung zur Ermittlung der Lage zweier relativ zueinander beweglicher Objekte, wie Bett (4) und Schlitten (2) einer Maschine mit Grenzlagenschaltern (9, 10, 11 ; 39) und korrespondierenden Nocken (4', 4" ; 34, 35), dadurch gekennzeichnet, daß zumindest ein Nocken (34, 35) oder Schalter (9, 10, 11) an wenigstens einer Fläche (8) eines Maßstab- oder Teilungsträgers der Meßeinrichtung (1) angeordnet ist.

2. Längen- oder Winkelmeßeinrichtung nach Anspruch 1, dadurch gekennzeichnet, daß mehrere Nocken (34, 35) oder Schalter (9, 10, 11) an Flächen (8, 8') des Maßstab- oder Teilungsträgers der Meßeinrichtung (1) angeordnet sind.

3. Längen- oder Winkelmeßeinrichtung nach Anspruch 1, dadurch gekennzeichnet, daß mehrere Nocken (34, 35) oder Schalter (9, 10, 11) in Meßrichtung gestaffelt an Flächen (8, 8') der Meßeinrichtung (1) angeordnet sind.

4. Längen- oder Winkelmeßeinrichtung nach Anspruch 1, dadurch gekennzeichnet, daß die Nocken oder Schalter (9, 11) am Maßstab- oder Teilungsträger in Meßrichtung längsverschieblich und festklemmbar sind.

5. Längen- oder Winkelmeßeinrichtung nach Anspruch 1, dadurch gekennzeichnet, daß zumindest eine Nocke (34, 35) fester Bestandteil des Maßstab- oder Teilungsträgers (31) ist.

## Claims

1. Length or angle-measuring device for determining the position of two articles movable relative to one another, such as the bed (4) and slide (2) of a machine with limit switches (9, 10, 11 ; 39) and corresponding cams (4', 4" ; 34, 35), characterized in that at least one cam (34, 35) or switch (9, 10, 11) is arranged on at least one face (8) of a scale carrier or division carrier of the measuring device (1).

2. Length or angle-measuring device according to Claim 1, characterized in that several cams (34, 35) or switches (9, 10, 11) are arranged on faces (8, 8') of the scale carrier or division carrier of the measuring device (1).

3. Length or angle-measuring device according to Claim 1, characterized in that several cams (34, 35) or switches (9, 10, 11) are arranged staggered in the measuring direction on faces (8, 8') of the measuring device (1).

4. Length or angle-measuring device according to Claim 1, characterized in that the cams or switches (9, 11) on the scale carrier or division carrier can be shifted longitudinally in the measuring direction and clamped.

5. Length or angle-measuring device according to Claim 1, characterized in that at least one cam (34, 35) is a fixed component of the scale carrier or division carrier (31).

## Revendications

1. Dispositif de mesure de longueurs ou d'angles, pour la détermination de la position de deux objets mobiles, tels que banc (4) et broche (2) d'une machine, muni d'interrupteurs de position limite (9, 10, 11 ; 39) et de cames (4', 4" ; 34, 35) correspondantes et caractérisé par le fait qu'au moins une came (34, 35) ou un interrupteur (10, 11) sont disposés sur au moins une face (8) d'un support d'échelle ou de graduation du dispositif de mesure (1).

2. Dispositif de mesure de longueurs ou d'angles selon la revendication 1 caractérisé par le fait que plusieurs cames (34, 35) ou interrupteurs (9, 10, 11) sont disposés sur des faces (8, 8') du support d'échelle ou de graduation du dispositif de mesure (1).

3. Dispositif de mesure de longueurs ou d'angles selon la revendication 1, caractérisé par le fait que plusieurs cames (34, 35) ou interrupteurs (9, 10, 11) sont disposés de façon échelonnée en direction de mesure sur des faces (8, 8') du dispositif de mesure (1).

4. Dispositif de mesure de longueurs ou d'angles selon la revendication 1 caractérisé par le fait que les cames ou interrupteurs (9, 11) sont déplaçables en translation longitudinale dans la direction de mesure, et blocables sur le support d'échelle ou de graduation.

5. Dispositif de mesure de longueurs ou d'angles selon la revendication 1 caractérisé par le fait qu'au moins une came (34, 35) est une partie intégrante du support d'échelle ou de graduation (31).